Europäisches Patentamt

European Patent Office

Office européen des brevets

(19)

(11) **EP 1 291 775 A1**

(12) **EUROPÄISCHE PATENTANMELDUNG**

(43) Veröffentlichungstag:
**12.03.2003 Patentblatt 2003/11**

(51) Int Cl.⁷: **G06F 11/36**

(21) Anmeldenummer: 01120775.0

(22) Anmeldetag: **07.09.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(71) Anmelder: **Universität Passau
94032 Passau (DE)**

(72) Erfinder: **Zeller, Andreas, Prof. Dr.
66133 Saarbrücken (DE)**

(74) Vertreter: **VOSSIUS & PARTNER
Siebertstrasse 4
81675 München (DE)**

(54) **Verfahren zum automatischen Bestimmen von Ursache-Wirkungs-Ketten in Computerprogrammen**

(57)     Die Erfindung betrifft ein Verfahren zum automatischen Bestimmen von Ursache-Wirkungs-Ketten in Computerprogrammen, insbesondere in Computerprogrammen in automatisch gesteuerten Anlagen. Insbesondere betrifft die vorliegende Erfindung ein Verfahren der Kausalitätsanalyse. Das Verfahren der Kausalitätsanalyse bestimmt beispielsweise aus dem Ablauf einer automatisch gesteuerten Anlage automatisch Ursache-Wirkungs-Ketten vom Start des Ablaufs über die Einflüsse bis zum Ende des Ablaufs.

EP 1 291 775 A1

**Beschreibung**

Die Erfindung betrifft ein Verfahren zum automatischen Bestimmen von Ursache-Wirkungs-Ketten in Computerprogrammen, insbesondere in Computerprogrammen in automatisch gesteuerten Anlagen. Insbesondere betrifft die vorliegende Erfindung ein Verfahren der Kausalitätsanalyse. Das Verfahren der Kausalitätsanalyse bestimmt beispielsweise aus dem Ablauf einer automatisch gesteuerten Anlage automatisch Ursache-Wirkungs-Ketten vom Start des Ablaufs über die Einflüsse bis zum Ende des Ablaufs. Bevorzugtes Einsatzgebiet der Erfindung ist die Fehlerlokalisierung in der Anlagensteuerung: Ausgehend von einer fehlerhaften Steuerung (der Ausgabe) lassen sich rückwirkend alle Ursachen (und deren Ursachen zurück bis zur sensorischen Eingabe) bestimmen.

In der Entwicklung von Computerprogrammen wird ein beträchtlicher Teil der aufzubringenden Arbeit für das Auffinden und Beheben von Fehlern aufgewandt. Dieser Aufwand wird auf bis zu 50 Prozent des gesamten Entwicklungsaufwands geschätzt. Während Analyse und Test (d. h. das Untersuchen bzw. Ausführen eines Programms mit dem Ziel, Fehler zu finden) seit Jahrzehnten Gegenstand ausgiebiger Forschung sind, sind im Debuggen (dem Eingrenzen und Beheben von Fehlerursachen) keine nennenswerten Fortschritte zu verzeichnen.

Im Stand der Technik sind Werkzeuge zum Programmverstehen (auch Debugger genannt) bekannt. Diese unterstützen den Programmierer beispielsweise durch Visualisierung von Daten und Abläufen. Ferner bekannt ist das Algorithmische Debuggen, das den Programmierer bei der Fehlersuche leitet, indem es ihn die Korrektheit von Zwischenergebnissen bestätigen lässt. Bekannt ist außerdem das Program Slicing. Dieses Verfahren hilft dem Programmierer durch Bestimmung potentieller Ursachen für beispielsweise fehlerhafte Programmzustände durch Programmanalyse.

Es gibt verschiedene fehlerverursachende Umstände, die erkannt und eliminiert werden müssen. Fehlerverursachende Umstände sind beispielsweise Änderungen am Programmcode (beispielsweise beim Übergang von einer älteren auf eine neuere Programmversion), Eingaben des Programms, ausgeführte Programmanweisungen und Schedules nebenläufiger Programme.

Zum Aufdecken von Fehlern, die durch Programmcode-Änderungen verursacht werden, haben sich sog. Regressionstests etabliert. Die Ursache der Regression, also die fehlerverursachende Änderung zu finden, ist jedoch bisher stets Handarbeit geblieben. Der einzige im Stand der Technik bekannte Ansatz, dieses Problem automatisch zu lösen, ist beschrieben in B. Ness *et al.*, Regression Containment Through Source Code Isolation, in Proceedings of the 21st Annual International Computer Software and Applications Conference (COMPSAC '97), Seiten 616-621, Washington, D.C., August 1997, IEEE Computer Society Press. Die grundlegende Idee dieser Veröffentlichung ist, aus einer Versionshistorie des Programms frühere Versionen zu testen und so wenigstens den Zeitpunkt der fehlerverursachenden Änderung einzugrenzen. Dieses Verfahren ermittelt jedoch lediglich den Zeitpunkt einer Änderung, nicht jedoch die Änderung selbst. Dies liegt daran, dass ein Zeitpunkt einer Versionshistorie hunderte von einzelnen Änderungen an verschiedenen Programmstellen umfassen kann. Diese Änderungen hängen zwar zeitlich, nicht unbedingt aber auch logisch zusammen. Deshalb ist unter Umständen nur eine kleine Untermenge fehlerverursachend. Verfahren, die automatisch eine möglichst kleine Menge fehlerverursachender Programmänderungen bestimmen, sind im Stand der Technik nicht bekannt.

Wie bereits erläutert hilft das bekannte Program Slicing dem Programmierer durch Bestimmung potentieller Ursachen für beispielsweise fehlerhafte Programmzustände durch Programmanalyse. Zum besseren Verständnis der Erfindung wird dieses bekannte Verfahren im folgenden kurz erläutert. Der Name "Program Slicing" beschreibt das Bestimmen der Anweisungen, die für einen bestimmten (meist fehlerhaften) Aspekt des Programmzustands verantwortlich sind. Grundsätzlich lassen sich Slicing-Techniken in drei Gruppen unterteilen:

- Statisches Slicing bestimmt alle Anweisungen, die den Zustand einer Variable an einer Stelle potentiell beeinflussen können - den sogenannten statischen Slice. Slices werden anhand des Kontroll- und Datenflusses bestimmt.
- Dynamisches Slicing betrachtet Slices bezogen auf eine bestimmte Ausführung des Programms. Grundidee ist, aus dem statischen Slice nur solche potentiell relevanten Anweisungen zu berücksichtigen, die auch tatsächlich ausgeführt wurden.
- Kritische Slices führen für die Relevanz von Anweisungen ein anderes Kriterium ein: Eine Anweisung ist für den Variablenzustand relevant (oder kritisch), wenn dieser Zustand nur durch Ausführung dieser Anweisung erreicht wird. Wird die Anweisung also nicht ausgeführt, ändert sich der Variablenwert.

Beim Program Slicing muss der Programmierer jedoch aus den potentiellen Ursachen die im konkreten Fall relevanten (manuell) auswählen.

Bezüglich Programmanweisungen als fehlerverursachende Umstände wird auf die US-A-5 758 061 verwiesen. Darin ist ein inkrementeller Abdeckungstest beschrieben. In jedem Testfall wird nur ein Teil der Anweisungen eines Programms ausgeführt ("abgedeckt"). Das beschriebene Verfahren besteht darin, für einen Testfall nicht alle abgedeckten Anweisungen auszugeben, sondern nur diejenigen, die in früheren Testfällen nicht bereits abgedeckt waren. Auch bei diesen Verfahren geht es jedoch lediglich um die Untersuchung von Programmanweisungen und nicht um Programmzustände wie bei einer Kausalitätsanalyse.

Um Fehler in einem Programm beheben zu können, ist es zunächst grundsätzlich notwendig, die fehlerverursachenden Umstände des Fehlers zu bestimmen. Dazu ist das sog. Delta-Debugging-Verfahren entwickelt worden (siehe A. Zeller: Yesterday, my programm worked. Today, it does not. Why? in Nierstrasz, O. und Michel Lemoine (Herausgeber: Proc. ESEC/FSE '99 - 7th European Software Engineering Conference/7th ACM SIGSOFT Symposium on the Foundations of Software Engineering, Band 1687 der Reihe Lecture Notes in Computer Science, Seiten 253-267, Toulouse, France, September 1999, Springer Verlag; deren Inhalt wird hier durch Bezugnahme aufgenommen). Dieses Delta-Debugging-Verfahren bestimmt Fehlerumstände automatisch, indem es das Programm unter wechselnden Bedingungen systematisch testet. Als Ergebnis liefert dieses Delta-Debugging-Verfahren eine minimale Menge von Fehlerumständen, die dem Programmierer unmittelbar die Fehlerursache zeigt - als fehlerverursachende Programmänderungen, Eingaben oder ausgeführte Programmanweisungen.

Das genannte Verfahren *Delta-Debugging* ist ein Verfahren, um fehlerverursachende Unterschiede in Programmen zu minimieren. Das Delta-Debugging-Verfahren wurde bisher im Stand der Technik eingesetzt, um eine minimale Menge von fehlerverursachenden Code-Änderungen zu finden (vgl. die genannte Veröffentlichung von A. Zeller), oder fehlerverursachende Eingaben zu minimieren (vgl. Hildebrandt, Ralf und Andreas Zeller: Simplifying Failure-Inducing Input, in: Proc. ACM SIGSOFT International Symposium on Software Testing and Analysis (ISSTA, Portland, Oregon, 23. August 2000); veröffentlicht auch im Januar 2000 unter www.fmi.uni-passau.de/st/dd hier durch Bezugnahme aufgenommen). Das Delta-Debugging-Verfahren arbeitet dabei vollautomatisch und bestimmt tatsächliche Fehlerursachen. Ein demgegenüber verbessertes Verfahren zum Isolieren fehlerverursachender Unterschiede ist beschrieben in Zeller, A.: Isolating Failure-Inducing Input, veröffentlicht im Januar 2001 unter www.fmi.unipassau.de/st/dd (deren Inhalt wird hier durch Bezugnahme aufgenommen).

Im folgenden wird das Delta-Debugging Verfahren anhand einfacher Beispiele näher erläutert. Dabei werden sechs unterschiedliche Alternativen des Delta-Debuggens beschrieben.

Ausgangspunkt sind zwei unterschiedliche Programmläufe $r_{\checkmark}$ und $r_x$. Im Programmlauf $r_{\checkmark}$ tritt ein Fehler auf, im Programmlauf $r_x$ nicht. Zwischen den beiden Läufen $r_{\checkmark}$ und $r_x$ gibt es einige Unterschiede. Diese Unterschiede bewirken den Fehler.

Beispiel: Ein Textverarbeitungsprogramm stürzt ab, wenn es den Text $r_x$ ausdrucken soll. Ein anderer Text $r_{\checkmark}$ funktioniert einwandfrei. Offensichtlich bewirkt irgendein Unterschied zwischen $r_{\checkmark}$ und $r_x$ den Absturz.

Formell besteht die Fehlerursache zunächst aus *allen* Unterschieden zwischen $r_{\checkmark}$ und $r_x$. In der Praxis ist man jedoch an möglichst einfachen oder *allgemeinen* Fehlerursachen interessiert. Es ist also notwendig, die Menge der Unterschiede zwischen $r_{\checkmark}$ und $r_x$ systematisch zu minimieren.

Im Beispiel des Textverarbeitungsprogramms stellt sich heraus, dass der Text $r_x$ ein Bild enthält, das in dem Text $r_{\checkmark}$ nicht auftritt. Entfernt man das Bild aus $r_x$, lässt sich $r_x$ problemlos ausdrucken. Daraus kann geschlossen werden, dass von allen Unterschieden zwischen $r_{\checkmark}$ und $r_x$ die Anwesenheit des Bildes derjenige Unterschied ist, der den Fehler verursacht.

Weglassen von Unterschieden

Eine Möglichkeit, die Menge der Unterschiede zwischen $r_{\checkmark}$ und $r_x$ systematisch minimieren wäre, jede Änderung (= jeden Unterschied) einzeln *wegzulassen* und zu prüfen, ob der Fehler nach wie vor auftritt; dies wird so lange fortgesetzt, bis die Menge minimal ist. Formell ausgedrückt, sieht das so aus:

- Die Menge der relevanten (= fehlerverursachenden) Änderungen zwischen $r_{\checkmark}$ und $r_x$ wird mit $c_x = \{\delta_1, \delta_2, ..., \delta_n\}$ bezeichnet.
- Eine Funktion *test* bestimmt für eine Menge von Änderungen, ob der Fehler auftritt. Konkret wendet *test* die Änderungen auf $r_{\checkmark}$ an und prüft das Ergebnis. Es gilt *test(c)* = **x**, wenn der Fehler auftritt, und *test(c)* = ✓, wenn nicht; *test*(∅) = ✓ (keine Änderungen) und *test*($c_x$) = **x**, (alle Änderungen) gelten stets.
- Dann bestimmt die folgende Funktion *dd*$_1$ eine minimale Menge relevanter Änderungen:

$$dd_1(c_x) = dd'_1(c_x)$$

wobei

$$dd_1(c_x) = dd'_1(c_x) \text{ wobei}$$

$$dd'_1(c'_x) = \begin{cases} dd_1(c'_x - \{\delta_i\}) & \text{wenn } \exists \delta_i \in c'_x \cdot test(c'_x - \{\delta_i\}) = \boldsymbol{x} \\ c'_x & \text{sonst} \end{cases}$$

$dd_1$ beginnt mit der Menge aller Änderungen, und entfernt solange Änderungen $\delta_i$, wie der Test auch ohne $\delta_i$ fehlschlägt. Während der gesamten Laufzeit von $dd_1$ gilt $test(c'_x) = \boldsymbol{x}$.

Beispiel: Es gebe 5 Änderungen $\delta_1, \dots \delta_5$. Der Fehler tritt auf, wenn $\delta_3$ und $\delta_4$ vorhanden sind. Die Berechnung von $dd_1 (c_x) = dd_1(\{\delta_1, \dots, \delta_5\})$ ergibt dann:

$$
\begin{aligned}
dd_1(c_x) &= dd_1(\{\delta_1, \dots, \delta_5\}) \\
&= dd_1(\{\delta_2, \dots, \delta_5\}) && \text{weil } test(\{\delta_1, \dots, \delta_5\} - \{\delta_1\}) = \boldsymbol{x} \\
&= dd_1(\{\delta_3, \delta_4, \delta_5\}) && \text{weil } test(\{\delta_2, \dots, \delta_5\} - \{\delta_2\}) = \boldsymbol{x} \\
&= dd_1(\{\delta_3, \delta_4, \delta_5\}) && \text{weil } test(\{\delta_3, \delta_4, \delta_5\} - \{\delta_3\}) = \checkmark \\
&= dd_1(\{\delta_3, \delta_4, \delta_5\}) && \text{weil } test(\{\delta_3, \delta_4, \delta_5\} - \{\delta_4\}) = \checkmark \\
&= dd_1(\{\delta_3, \delta_4\}) && \text{weil } test(\{\delta_3, \delta_4, \delta_5\} - \{\delta_5\}) = \boldsymbol{x} \\
&= dd_1(\{\delta_3, \delta_4\}) && \text{weil } test(\{\delta_3, \delta_4\} - \{\delta_3\}) = \checkmark \\
&= dd_1(\{\delta_3, \delta_4\}) && \text{weil } test(\{\delta_3, \delta_4\} - \{\delta_4\}) = \checkmark \\
&= \{\delta_3, \delta_4\} && \text{weil } \neg\exists \delta_i \in \{\delta_3, \delta_4\} \cdot test(\{\delta_3, \delta_4\} - \{\delta_i\}) = \boldsymbol{x}
\end{aligned}
$$

Hinzufügen von Unterschieden

Als Alternative zur Minimierung der relevanten Änderungen werden die irrelevanten Änderungen maximiert: Es wird mit gar keinen Änderungen begonnen (d.h. keine Änderungen sind irrelevant). Dieser Menge werden so lange Änderungen $\delta_i$ hinzugefügt, wie der Test auch mit $\delta_i$ gelingt ($\delta_i$ ist also irrelevant). Die relevanten Änderungen sind dann das Komplement zu den irrelevanten Änderungen.

$$dd_2(c_x) = dd'_2(\varnothing, c_x) \text{ wobei}$$

$$dd'_2(c'_\checkmark, c'_x) = \begin{cases} dd'_2(c'_\checkmark \cup \{\delta_i\}, c'_x) & \text{wenn } \exists \delta_i \in c'_x \cdot test(c'_\checkmark \cup \{\delta_i\}) = \checkmark \\ c'_\checkmark & \text{sonst} \end{cases}$$

Während der gesamten Laufzeit von $dd'_2$ gilt $test(c_\checkmark) = \checkmark$ und $test(c'_x) = \boldsymbol{x}$.

Im Beispiel, wie oben beschrieben, bestimmt $dd'_2(c'_x) = dd_2(\{\delta_1, \dots, \delta_5\}) = dd'_2(\varnothing, \{\delta_1, \dots, \delta_5\}) = \{\delta_1, \delta_2, \delta_5\}$; also genau die Änderungen, die für den Fehler irrelevant sind.

Kombinierter Ansatz

Sowohl $dd_1$ als auch $dd_2$ benötigen im schlimmsten Fall $n^2/2$ Tests bei n Änderungen. Ein deutlich effizienteres Verfahren erhält man, wenn beide Algorithmen kombiniert werden, und jeweils Änderungen zur ursprünglich leeren Menge $\Delta$ hinzufügt werden, wenn sie relevant sind, und aus $\Delta'$ entfernt werden, wenn sie irrelevant sind. Damit erhält man formal den folgenden Algorithmus:

$$dd_3(c_x) = dd'_3(\emptyset, c_x)$$

wobei

$$dd'_3(c'_\checkmark, c'_x) = \begin{cases} dd'_3(c'_\checkmark \cup \{\delta_i\}, c'_x) & \text{wenn } \exists \delta_i \in \Delta \cdot test(c'_\checkmark \cup \{\delta_i\}) = \checkmark \\ dd'_3(c'_\checkmark, c'_x - \{\delta_i\}) & \text{wenn } \exists \delta_i \in \Delta \cdot test(c'_x - \{\delta_i\}) = \mathbf{x} \\ (c'_\checkmark, c'_x) & \text{sonst} \end{cases}$$
$$\text{wobei } \Delta = c'_x - c'_\checkmark$$

$dd_3$ gibt ein Paar $(c'_\checkmark, c'_x)$ zurück, wobei $test(c'_\checkmark) = \checkmark$ und $test(c'_x) = \mathbf{x}$ gilt und der Unterschied zwischen $c'_\checkmark$ und $c'_x$ minimal ist. Die Eigenschaft $test(c'_\checkmark) = \checkmark$ und $test(c'_x) = \mathbf{x}$ gilt während der gesamten Laufzeit.

Beispiel (wie vorher): Es gebe 5 Änderungen $\delta_1, \ldots \delta_5$. Der Fehler tritt auf, wenn $\delta_3$ und $\delta_4$ vorhanden sind. Die Berechnung von $dd_3(c_x) = dd_3(\{\delta_1, \ldots \delta_5\})$ ergibt dann:

$$\begin{aligned} dd_3(c_x) &= dd'_3(\emptyset, \{\delta_1, \ldots, \delta_5\}) \\ &= dd'_3(\{\delta_1\}\{\delta_1, \ldots, \delta_5\}) & \text{weil } test(\emptyset \cup \{\delta_1\}) = \checkmark \\ &= dd'_3(\{\delta_1, \delta_2\}\{\delta_1, \ldots, \delta_5\}) & \text{weil } test(\{\delta_1\} \cup \{\delta_2\}) = \checkmark \\ &= dd'_3(\{\delta_1, \delta_2, \delta_3\}\{\delta_1, \ldots, \delta_5\}) & \text{weil } test(\{\delta_1, \delta_2\} \cup \{\delta_3\}) = \checkmark \\ &= dd'_3(\{\delta_1, \delta_2, \delta_3\}\{\delta_1, \ldots, \delta_4\}) & \text{weil } test(\{\delta_1, \ldots, \delta_5\} - \{\delta_5\}) = \mathbf{x} \\ &= (\{\delta_1, \delta_2, \delta_3\}, \{\delta_1, \delta_2, \delta_3, \delta_4\}) \end{aligned}$$

Der Unterschied $\Delta$ zwischen $c'_\checkmark = \{\delta_1, \delta_2, \delta_3\}$ und $c'_x = \{\delta_1, \delta_2, \delta_3, \delta_4\}$ ist $\Delta = c'_x - c'_\checkmark = \{\delta_4\}$. Während der Test mit $c'_\checkmark$ bestanden ist, genügt es, $\Delta$ hinzuzufügen, um $c'_x$ zu erhalten und den Fehler auftreten zu lassen.

Der Vorteil des Verfahrens unter Verwendung von $dd_3$ ist, dass sich mit jedem Test der Unterschied zwischen $c'_\checkmark$ und $c'_x$ um ein $\delta_i$ verringert. Insgesamt werden also höchstens n Tests benötigt. Außerdem ist die gefundene Differenz geringer.

Eine schnelle "Abkürzung"

Wenn in $dd_3$ die Menge $c'_\checkmark \cup \{\delta_i\}$ getestet und $\mathbf{x}$ erhalten wird, wurde sofort die eine relative Änderung gefunden (Zur Erinnerung: $test(c'_\checkmark) = \checkmark$ gilt immer; nun kommt $test(c'_\checkmark \cup \{\delta_i\}) = x$ hinzu). Diese wichtige "Abkürzung" benötigt keine weiteren Tests, sondern nur zwei weitere Fallunterscheidungen:

$$dd_4(c_x) = dd'_4(\emptyset, c_x)$$

wobei

$$dd'_4(c'_{\checkmark},c'_x) = \begin{cases} dd'_4(c'_{\checkmark}, c'_{\checkmark} \cup \{\delta_i\}) & \text{wenn } \exists \delta_i \in \Delta \cdot test(c'_{\checkmark} \cup \{\delta_i\}) = \mathbf{x} \\ dd'_4(c'_x - \{\delta_i\}, c'_x) & \text{wenn } \exists \delta_i \in \Delta \cdot test(c'_x - \{\delta_i\}) = \checkmark \\ dd'_4(c'_{\checkmark} \cup \{\delta_i\}, c'_x) & \text{wenn } \exists \delta_i \in \Delta \cdot test(c'_{\checkmark} - \{\delta_i\}) = \checkmark \\ dd'_4(c'_{\checkmark}, c'_x - \{\delta_i\}) & \text{wenn } \exists \delta_i \in \Delta \cdot test(c'_x - \{\delta_i\}) = \mathbf{x} \\ (c'_{\checkmark}, c'_x) & \textit{sonst} \end{cases}$$

$$\text{wobei } \Delta = c'_x - c'_{\checkmark}$$

## Weglassen von Gruppen

Häufig ist es möglich, mehrere Änderungen zu logischen Gruppen zusammenzufassen. Sofern etwa die Differenzmenge $\Delta = c'_x - c'_{\checkmark}$ stets in zwei Untermengen $\Delta_1 \cup \Delta_2 = \Delta$ aufgeteilt werden kann, erhält man einen klassischen "Teile und herrsche"-Algorithmus.

$$dd_5(c'_x) = dd'_5(\varnothing, c_x)$$

wobei

$$dd'_5(c'_{\checkmark},c'_x) = \begin{cases} dd'_5(c'_{\checkmark}, c'_{\checkmark} \cup \Delta_i) & \text{wenn } \exists i \in \{1,2\} \cdot test(c'_{\checkmark} \cup \Delta_i) = \mathbf{x} \\ dd'_5(c'_x - \Delta_i, c'_x) & \text{wenn } \exists i \in \{1,2\} \cdot test(c'_x - \Delta_i) = \checkmark \\ dd'_5(c'_{\checkmark} \cup \Delta_i, c'_x) & \text{wenn } \exists i \in \{1,2\} \cdot test(c'_{\checkmark} - \Delta_i) = \checkmark \\ dd'_5(c'_{\checkmark}, c'_x - \Delta_i) & \text{wenn } \exists i \in \{1,2\} \cdot test(c'_x - \Delta_i) = \mathbf{x} \\ (c'_{\checkmark}, c'_x) & \textit{sonst} \end{cases}$$

$$\text{mit } \Delta = \Delta_1 \cup \Delta_2 = c'_x - c'_{\checkmark}, \Delta_1 \cap \Delta_2 = \varnothing$$

Dieses Verfahren ist erneut deutlich effizienter: Im Schnitt benötigt es $2\log_2(n)$ Tests. In jedem Schritt gilt $test(c'_{\checkmark}) = \checkmark$ und $test(c'_x) = \mathbf{x}$.

Beispiel (wie vorher): Es gebe 5 Änderungen $\delta_1, \dots \delta_5$. Der Fehler tritt auf, wenn $\delta_3$ und $\delta_4$ vorhanden sind. Die Berechnung von $dd_5(c_x) = dd_5(\{\delta_1, \dots \delta_5\})$ ergibt dann:

$$dd_5(c_x) = dd'_5(\varnothing, \{\delta_1, \dots, \delta_5\})$$

$$= dd'_5(\{\delta_1, \delta_2, \delta_3\}\{\delta_1, \dots, \delta_5\}) \quad \text{weil } test(c'_x - \Delta_1) = test(\{\delta_1, \dots, \delta_5\} - \{\delta_1, \delta_2, \delta_3\}) = \checkmark$$

$$= dd'_5(\{\delta_1, \delta_2, \delta_3\}\{\delta_1, \dots, \delta_4\}) \quad \text{weil } test(c'_x \cup \Delta_1) = test(\{\delta_1, \delta_2, \delta_3\} \cup \{\delta_4\}) = \checkmark$$

$$= (\{\delta_1, \delta_2, \delta_3\}, \{\delta_1, \delta_2, \delta_3, \delta_4\})$$

Im Gegensatz zu den vorher erläuterten Verfahren $dd_1$ bis $dd_4$ werden also nur noch zwei Tests benötigt, um die fehlerverursachende Änderung $\delta_4$ zu isolieren.

## Variable Granularität

Wenn mehrere Änderungen gleichzeitig angewendet werden, kann es passieren, dass $test$ weder $\checkmark$ noch $\mathbf{x}$ zurückliefert - etwa, weil die Änderungen nicht zusammenpassen und zu einem inkonsistenten Ablauf führen. Ein solcher "unbekannter" Testausgang wird mit ? gekennzeichnet.

Um "unbekannte" Testausgänge zu handhaben, wird eine *Mischform* aus dem "feingranularen" Verfahren $dd_4$, in dem Änderungen einzeln angewandt wurden, und dem "grobgranularen" Verfahren $dd_5$, in dem Änderungen als Gruppen angewandt wurden, erzeugt. Der zusätzliche Parameter n steuert die Anzahl der Untermengen. Ist n = $|\Delta|$, erhalten wir $dd_4$, ist n= 2, so erhalten wir $dd_5$. Die Granularität wird immer verdoppelt, wenn alle Testausgänge "unbekannt" sind.

$$dd_6(c_x) = dd'_6(\varnothing, c_x, n)$$

wobei

$$dd'_6(c'_\swarrow, c'_x, n) = \begin{cases} dd'_6(c'_\swarrow, c'_\swarrow \cup \Delta_i, 2) & \text{wenn } \exists i \in \{1,\ldots,n\} \cdot test(c'_\swarrow \cup \Delta_i) = \mathbf{x} \\ dd'_6(c'_x - \Delta_i, c'_x, 2) & \text{wenn } \exists i \in \{1,\ldots,n\} \cdot test(c'_x - \Delta_i) = \checkmark \\ dd'_6(c'_\swarrow \cup \Delta_i, c'_x, \max(n-1,2)) & \text{wenn } \exists i \in \{1,\ldots,n\} \cdot test(c'_\swarrow - \Delta_i) = \checkmark \\ dd'_6(c'_\swarrow, c'_x - \Delta_i, \max(n-1,2)) & \text{wenn } \exists i \in \{1,\ldots,n\} \cdot test(c'_x - \Delta_i) = \mathbf{x} \\ dd'_6(c'_\swarrow, c'_x, \min(2n,|\Delta|)) & \text{wenn } 2ni < |\Delta| \\ (c'_\swarrow, c'_x) & \text{sonst} \end{cases}$$

$$\text{mit } \Delta = \Delta_1 \cup \ldots \cup \Delta_n = c'_x - c'_\swarrow, \Delta_i \text{ paarweise disjunkt}$$

Beispiel: Es gebe 5 Änderungen $\delta_1, \ldots \delta_5$. Der Fehler tritt auf, wenn $\delta_3$ und $\delta_4$ vorhanden sind. Ist aber nur $\delta_3$ oder nur $\delta_4$ vorhanden, ist das Testergebnis ?. Die Berechnung von $dd_6(c_x) = dd_6(\{\delta_1, \ldots \delta_5\})$ ergibt dann:

$$dd_6(c_x) = dd'_6(\varnothing, \{\delta_1, \ldots, \delta_5\}, 2)$$

$$= dd'_6(\varnothing, \{\delta_1, \ldots, \delta_5\}, 4) \qquad \text{weil alle Testausgänge mit } \Delta_1 = \{\delta_1, \delta_2, \delta_3\} \text{ und}$$
$$\Delta_2 = \{\delta_4, \delta_5\} \text{ „unbekannt"}$$

$$= dd'_6(\{\delta_1, \delta_2\}, \{\delta_1, \ldots, \delta_5\}, 3) \qquad \text{weil } test(c'_x - \Delta_1) = test(\varnothing \cup \{\delta_1, \delta_2\}) = \checkmark$$

$$= dd'_6(\{\delta_1, \delta_2\}, \{\delta_1, \ldots, \delta_4\}, 2) \qquad \text{weil } test(c'_x \cup \Delta_4) = test(\{\delta_1, \ldots, \delta_5\}) - \{\delta_5\}) = \checkmark$$

$$= (\{\delta_1, \delta_2\}, \{\delta_1, \delta_2, \delta_3, \delta_4\})$$

Hier wird nun die fehlerverursachende Menge $\{\delta_3, \delta_4\}$ isoliert, deren Änderungen einzeln nicht angewandt werden können.

Nach dieser formalen Erläuterung des Delta-Debugging Verfahrens werden nun mögliche Deltas beschrieben.

Grundsätzlich sollte ein Delta drei Bedingungen erfüllen:

- Es sollte *dekomposierbar* sein, d. h. es muss möglich sein, ein Delta in kleinere Deltas zu zerlegen.
  Beispiel: Der Unterschied zwischen zwei Magnetstreifen lässt sich in kleinere Unterschiede an verschiedenen Stellen des Magnetstreifens zerlegen.

- Es sollte *anwendbar* sein, d. h. es muss möglich sein, den Unterschied nicht nur festzustellen, sondern auch, ihn zu *bewirken.*
  Beispiel: Zwei Smartcards haben unterschiedliche Chips mit unterschiedlichem Verhalten. Dennoch ist es nicht möglich, in einer Smartcard ein bestimmtes Verhalten des Chips zu forcieren, ohne den Schlüssel zu kennen.

- Es sollte möglichst *feingranular* sein, d. h. die Wirkung sollte möglichst klein sein.

Beispiel: Eine Web-Seite funktioniert unter Internet Explorer, nicht jedoch unter Netscape. Dieses sehr grobgranulare Delta lässt sich nicht weiter zerlegen, da es keine "Mischformen" aus beiden Programmen gibt. Anders sieht dies aus, wenn zwei Netscape-Versionen zur Wahl stehen: Hier sind feingranulare Unterschiede im Code zu erwarten.

Deltas, die bisher erfolgreich untersucht wurden, schließen ein:

- Änderungen am Code (z. B. zwischen zwei Programmversionen).
- Änderungen der Eingabe.
- Änderungen des internen Programmzustands.
- Änderungen der Programm-Verzweigungen.
- Änderungen des Thread-Schedulers.

Eine wesentliche Rolle kommt dabei der Testfunktion zu. Die Testfunktion *test* erhält eine Menge von Unterschieden (= Änderungen), die sie auf den funktionierenden Verlauf anwendet. Was "Anwenden" genau bedeutet, hängt von der Art der Unterschiede ab (siehe oben).

Anschließend prüft *test*, ob der erwartete Fehler (= der Fehler, dessen Ursachen gesucht werden) auftritt:

- Tritt der Fehler wie erwartet auf, gibt *test* den Wert **x** zurück.

- Tritt der Fehler nicht auf und ist das Programmergebnis korrekt, gibt *test* den Wert ✓ zurück.

- Kann das Testergebnis nicht bestimmt werden (etwa weil kein Programmzustand erreicht würde, der als fehlerhaft oder korrekt bezeichnet werden könnte), gibt *test* den Wert **?** zurück.
  Welche Aspekte eines Programmlaufs zum Fehler dazugehören und welche nicht, kann dabei die Suche der Ursachen deutlich beeinflussen. Grundregel ist: Je mehr Umstände zu einem Fehler gehören, desto größer die Menge der Umstände, die diesen Fehler bewirken.

Als Beispiel betrachten wir die Situation, dass ein Programm bei einer bestimmten Eingabe wegen einer "allgemeinen Schutzverletzung" aufgrund inkonsistenter Datenstrukturen abstürzt. Die Frage ist, welcher Teil der Eingabe für den Fehler verantwortlich ist. Dies hängt jedoch von der Präzision der test-Funktion ab:

- Prüft die *test*-Funktion nur auf das Auftreten einer "allgemeinen Schutzverletzung", kann es passieren, dass Delta Debugging eine Eingabe präsentiert, die tatsächlich eine "allgemeine Schutzverletzung" produziert - aber an anderer Stelle.

- Prüft die *test*-Funktion das Auftreten einer "allgemeinen Schutzverletzung" an einer bestimmten Programmstelle, kann es passieren, dass Delta Debugging eine Eingabe präsentiert, die tatsächlich eine "allgemeine Schutzverletzung" an dieser Stelle produziert - aber unter anderen Variablenbelegungen.

- Prüft die *test*-Funktion auf den kompletten Programmzustand zum Zeitpunkt des Absturzes, gibt Delta Debugging womöglich die gesamte Eingabe zurück. Um nämlich genau diesen Programmzustand zu erzeugen, ist in der Regel die gesamte Eingabe vonnöten.

In der Praxis hat es sich als geigneter Mittelweg erwiesen, bei fehlerhaften Ausgaben lediglich auf die fehlerhaften Aspekte zu prüfen. Bei Programmabstürzen ist es empfehlenswert, die fehlerhafte Variablenbelegung (sofern bekannt) in Verbindung mit dem Programmzähler zu vergleichen.
Eine Umsetzung des erläuterten Delta-Debugging Verfahrens in der Programmierspra che Python ist im folgenden angegeben.

```
# Constants for test outcomes
FAIL = "FAIL"
PASS = "PASS"
UNRESOLVED = "UNRESOLVED"

# Simple dd algorithm.  dd(deltas) returns a tuple
# (cpass, cfail), where test(cpass) = PASS, test(cfail) = FAIL,
# cpass is a subset of cfail, cfail is a subset of deltas,
# and cfail - cpass is minimal.
def dd(deltas):
    return dd_sub(emptyset, deltas, 2)

# Helper
def dd_sub(c_pass, c_fail, n):
    offset = 0                  # Where to start checking subsets

    # We replace the tail recursion from the functional definition
    # by a loop.
    while 1:
        c = listminus(c_fail, c_pass)

        if n > len(c):
            # No further minimizing
            return (c_pass, c_fail)

        cs = split(c, n)

        next_c_pass = c_pass
        next_c_fail = c_fail
        next_n      = n

        # Check subsets
        for j in range(0, n):
            i = (j + offset) % n
            csub = listunion(c_pass, cs[i])
            t1 = test(csub)

            if t1 == FAIL:
                # Reduce to subset
                next_c_fail = csub
                next_n      = 2
                offset      = 0

            if t1 == PASS:
                # Reduce to complement
                next_c_pass = csub
```

```
            next_n         = max(next_n - 1, 2)
            offset         = i

        csub = listminus(c_fail, cs[i])
        t2 = test(csub)

        if t2 == PASS:
            # Increase to subset
            next_c_pass = csub
            next_n         = 2
            offset         = 0

        if t2 == FAIL:
            # Increase to complement
            next_c_fail = csub
            next_n         = max(next_n - 1, 2)
            offset         = i

    if t1 == UNRESOLVED and t2 == UNRESOLVED:
        if n >= len(c):
            # No further minimizing
            return (c_pass, c_fail)

        next_n = min(n * 2, len(c))
        offset = (offset * next_n) / n

    c_pass = next_c_pass
    c_fail = next_c_fail
    n      = next_n

# Return a list [c_1, ..., c_n] of disjoint subsets of n.
# More elaborate implementations may check the semantics of the c_i's.
def split(c, n):
    subsets = []
    start = 0
    for i in range(0, n):
        subset = c[start:start + (len(c) - start) / (n - i)]
        subsets.append(subset)
        start = start + len(subset)

    return subsets

# Return the set c2 - c1, where c1 and c2 are lists.
def listminus(c1, c2):
    s2 = {}
    for delta in c2:
        s2[delta] = 1

    c = []
    for delta in c1:
        if not s2.has_key(delta):
            c.append(delta)

    return c
```

```
# Return the union of c1 and c2, where c1 and c2 are lists.
def listunion(c1, c2):
    s1 = {}
    for delta in c1:
        s1[delta] = 1

    c = c1[:]
    for delta in c2:
        if not s1.has_key(delta):
            c.append(delta)

    return c

# Test function.  Apply the deltas in c and return the test outcome.
def test(c):
    # Return FAIL, PASS, or UNRESOLVED
```

Das erläuterte Delta-Debugging-Verfahren ist grundsätzlich jedoch nur geeignet, die externen Fehlerursachen einzugrenzen - die Abfolge von Ursachen und Wirkungen innerhalb des Programmablaufs bleiben verborgen. Im Fall der fehlerverursachenden Eingaben hat das Verfahren beispielsweise den Nachteil, dass es nicht differenziert zwischen Eingabeteilen, die den Fehler verursachen, und Eingabeteilen, die ohnehin Bestandteil einer gültigen Eingabe sein müssen.

Eine Wirkungskette, wie sie eine Kausalitätsanalyse theoretisch hervorbringt, ist beispielsweise die folgende:

- Der Sensor übergibt den Messwert 1 an das Steuerungsprogramm;
- Deshalb hat in der Hauptfunktion die Variable x den Wert 5;
- Deshalb hat die Funktion f das Argument 100;
- Deshalb gerät das Steuerprogramm in eine Endlosschleife;
- Deshalb gerät die Anlage in einen nicht definierten Zustand;
- Deshalb tritt ein Fehler auf.

Das bekannte Delta-Debugging-Verfahren bestimmt lediglich das erste Element einer Kausalitätskette, wie etwa die fehlerverursachende Eingabe, die fehlerverursachende Code-Änderung, oder ähnliche externe Faktoren, die den Programmlauf beeinflussen. Um den Fehler zu beheben, muß jedoch die gesamte Kausalitätskette bekannt sein. Das Problem ist nun, die Kausalitätskette so zu unterbrechen, dass nicht nur das eine Auftreten des Fehlers verschwindet, sondern möglichst alle.

Diese Problematik wird im folgenden beispielsweise anhand eines Programmes, das die Anzahl der Vokale in einer Zeichenkette bestimmt, erläutert. Beim Ablauf des Programms wird festgestellt, dass die Eingabe "ABC" den falschen Wert 2 liefert. Dieser konkrete Fehler kann eliminiert werden, indem eine Abfrage eingefügt wird: "Wenn die Eingabe "ABC" ist, gib 1 zurück, ansonsten fahre fort wie bisher". Somit wird jedoch lediglich dieser eine Fehler beseitigt. Um aber jedes Auftreten eines Fehlers zu eliminieren, ist es notwendig zu wissen, wie die Eingabe "ABC" letztendlich zum Wert 2 führt. Dies ist nur über die Ursache-Wirkungs-Kette bzw. die Kausalitätskette möglich.

Allgemeiner gesehen, kann ein Ablauf eines Computerprogramms bzw. einer automatisch gesteuerten Anlage als eine Folge von Zuständen gesehen werden. Jeder Zustand ergibt sich aus dem Vorgängerzustand, wie es durch das Steuerprogramm bestimmt ist. Ein Fehler manifestiert sich dabei durch eine bestimmte Eigenschaft eines Zustands. Die Ursache eines Fehlers zu beschreiben, ist nicht zwangsläufig trivial. Da jeder Anlagenzustand durch seinen Vorgängerzustand bewirkt wird, ist der Vorgängerzustand die Ursache für den Fehler. Folgt man dieser Ursache-Wirkungs-Kette bis zum Anfang zurück, landet man letztendlich beim Startzustand der Anlage - einschließlich einer bestimmten Eingabe (z. B. Parameter des Ablaufs) als Fehlerursache. Diese Rückverfolgung bis zu einer bestimmten Eingabe ist jedoch nutzlos, da noch keine Erkenntnis darüber besteht, welche Anteile des Anlagenzustands nun wirklich für das Auftreten des Fehlers relevant oder irrelevant sind. Ein Anteil des Anlagenzustands ist genau dann relevant für das Auftreten eines Fehlers, wenn es eine alternative Ausprägung gibt, bei der der Fehler nicht mehr auftritt.

Als weiteres Beispiel wird hier der Wert einer Variablen im Steuerungsprogramm betrachtet. Während des Programmablaufs stellt sich heraus, dass etwa die Variable x den Wert 0 hat. Diese Erkenntnis ist dann relevant für das Auftreten des Fehlers, wenn gezeigt werden kann, dass es einen anderen Wert von x gibt, mit dem der Fehler nicht auftritt. Mittels des bekannten Program Slicing kann unter Umständen gezeigt werden, dass x wahrscheinlich irrelevant ist, nämlich wenn keine Kontroll- oder Datenabhängigkeit vom fehlerhaften Zustand zu x besteht. Im Falle vollständigen Wissens über das Programm könnte Program Slicing sogar die vollständige Irrelevanz von x bestimmen. Um die Relevanz - und somit die tatsächliche Kausalität - nachzuweisen, muss das Steuerprogramm tatsächlich ausgeführt werden, und zwar mit verändertem Programmzustand.

Der vorliegenden Erfindung liegt die Aufgabe zugrunde, ein Verfahren anzugeben, mit dem Ursache-Wirkungs-Ketten in Computerprogrammen, insbesondere in Computerprogrammen von automatisch gesteuerten Anlagen, automatisch bestimmt werden. Diese Aufgabe wird mit den Merkmalen der Patentansprüche gelöst.

Das erfindungsgemäße Verfahren basiert auf dem Grundgedanken, fehlerverursachende Zustandsunterschiede im Ablauf eines Programms automatisch zu bestimmen und zu minimieren. Die Zustände zweier Abläufe - eines funktionierenden und eines fehlerhaften - werden an ausgewählten Stellen automatisch verglichen und einander teilweise angeglichen. Durch anschließendes Ausführen wird bestimmt, ob der verbliebene Unterschied fehlerrelevant war. Das Angleichen wird fortgesetzt, bis ein minimaler fehlerverursachender Zustandsunterschied verbleibt - etwa der Wert einer Variablen oder der Wert eines Sensors. Die Kette dieser minimalen Zustandsunterschiede beschreibt Ursache und Wirkungen von der Eingabe bis zum Fehler.

Das erfindungsgemäße Verfahren der Kausalitätsanalyse vereinfacht also das Eingrenzen und Beheben eines Fehlers, indem es automatisch die Ursache-Wirkungs-Kette bestimmt - die vollständige Folge von Ursachen und Wirkungen von den ursprünglichen Einflüssen (etwa der sensorischen Eingabe) bis zum Auftreten des Fehlers. Hierbei werden in jedem Zwischenschritt alle irrelevanten Umstände automatisch ausgeschlossen und der Unterschied zu einem korrekten Ablauf verdeutlicht. Dabei geht das erfindungsgemäße Verfahren von der Grundidee aus, statt eines einzelnen Ablaufs zwei Abläufe zugrundezulegen - einen Ablauf A, in dem der Fehler nicht auftritt, und einen Ablauf B, in dem der Fehler auftritt. Die beiden Abläufe A und B unterscheiden sich hierbei in ihren Startzuständen (beispielsweise in der zugrundeliegenden Eingabe). Sie unterscheiden sich auch in ihren Zwischenzuständen. Dies bedeutet, dass kein Zustand von A jemals in B auftritt und umgekehrt (hätten A und B jemals einen gleichen Zustand, würde daraus der gleiche Endzustand folgen, und A und B würden sich nicht mehr im Auftreten des Fehlers unterscheiden). Allgemein gesprochen, wird erfindungsgemäß der Unterschied zwischen den Zuständen dieser beiden Programmläufe minimiert. Haben beispielsweise im Steuerprogramm von A zu einem "Zeitpunkt" die Variablen $x$, $y$, $z$ die Werte $x = 1$, $y = 2$ und $z = 3$ und in B zum gleichen "Zeitpunkt" die Werte $x = 4$, $y = 5$ und $z = 6$, so gilt es, den fehlerverursachenden Unterschied zu bestimmen. Ein solcher fehlerverursachender Unterschied könnte etwa "$x = 1$ in A statt $x = 4$ in B" sein und würde bedeuten, dass es genügt, $x$ von 1 nach 4 zu verändern, um den Fehler verschwinden oder auftreten zu lassen, und dies unabhängig vom Unterschied im Wert von $y$ und $z$. Mit anderen Worten, $x$ ist Ursache für den Fehler, $y$ und $z$ sind es jedoch nicht. Erfindungsgemäß werden solche fehlerverursachenden Unterschiede automatisch bestimmt und minimiert.

Das erfindungsgemäße Verfahren zum automatischen Bestimmen von Ursache-Wirkungs-Ketten bestimmt zunächst Synchronisationspunkte, d. h. ausgewählte Stellen des Ablaufs des Computerprogramms bzw. einer zu steuernden Anlage, an denen der Anlagenzustand anhand von zwei Abläufen verglichen wird. Dieser Aspekt der Zustandssynchronisation wird später noch ausführlicher erläutert. Danach wird beim erfindungsgemäßen Verfahren an jedem einzelnen Synchronisationspunkt, beispielsweise unter Verwendung des in der genannten Veröffentlichung "Isolating Failure-Inducing Input" beschriebenen Delta-Debugging-Verfahrens, bestimmt, welche Unterschiede im Anlagenzustand bzw. im Ablauf des Computerprogramms relevant für das Auftreten des Fehlers sind. Als Ergebnis liefert das erfindungsgemäße Verfahren eine Liste von Zustandsunterschieden, die die Ursache-Wirkungs-Kette im Ablauf beschreibt.

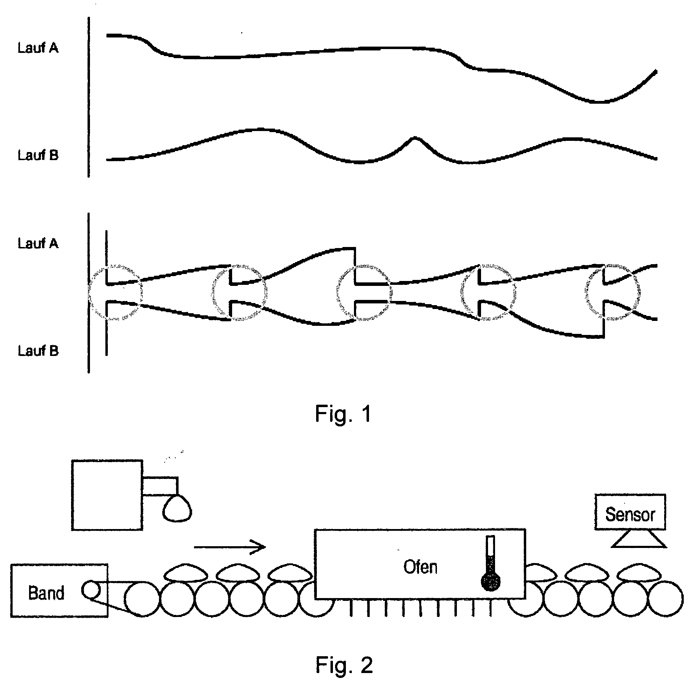

Eine schematische Darstellung des erfindungsgemäßen Verfahrens ist in Fig. 1 beispielhaft gegeben. Die durchgezogenen Linien für Ablauf A und Ablauf B kennzeichnen jeweils den aktuellen Anlagenzustand. Ein größerer Abstand zwischen den dargestellten Linien bedeutet einen größeren Unterschied im Anlagenzustand. Dabei zeigt das obere Bild von Fig. 1 die gegebene Situation. Die Abläufe A und B unterscheiden sich erheblich. Irgendwo in diesem Unterschied zwischen den Abläufen A und B liegt die Fehlerursache. Das untere Bild von Fig. 1 veranschaulicht die Anwendung des erfindungsgemäßen Verfahrens der Kausalitätsanalyse auf die im oberen Bild dargestellten Abläufe. An ausgewählten Synchronisationspunkten (mit Kreisen gekennzeichnet) wird der Unterschied zwischen den Abläufen A und B minimiert. Außerhalb dieser Synchronisationspunkte zeigt die Anlage zwar immer noch unterschiedliches Verhalten, doch sind die Unterschiede nicht mehr so groß wie im oberen Bild von Fig. 1. In jedem Synchronisationspunkt zeigt der minimierte Unterschied einen Teil der Ursache-Wirkungs-Kette des Programms bzw. der Anlage.

Erfindungsgemäß werden also im Vergleich zu bekannten Debugging-Verfahren mehrere Abläufe verglichen, und vorzugsweise zwei Abläufe zugrundegelegt. In einem Ablauf tritt der Fehler auf, in einem weiteren Ablauf tritt der Fehler nicht auf. Ein weiterer Unterschied zu bekannten Debugging-Verfahren ist darin zu sehen, dass erfindungsgemäß der gesamte Anlagenzustand Gegenstand der Fehlerursache sowie der Bestimmung und Anwendung von Unterschieden ist, was einen Einblick in Ursachen und Wirkungen im gesamten Ablauf ermöglicht. Ferner wird erfindungsgemäß jede Kausalität durch einen eigenen Testlauf eigens überprüft, wodurch relevante von irrelevanten Unterschieden getrennt werden.

Nach dieser allgemeinen Erläuterung des erfindungsgemäßen Verfahrens wird nun auf die einzelnen Verfahrensschritte detaillierter eingegangen.

Zustandssynchronisation

Um zwei Programm- bzw. Anlagenzustände zu vergleichen, wird erfindungsgemäß ein Zustand angenommen, mit dem ausgewählte Aspekte des Programm- bzw. Anlagenzustands automatisch erfasst und verändert werden können. Bei einem Steuerprogramm ist dies etwa durch einen Zugang zum Arbeitsspeicher des steuernden Rechners gegeben. Bei einem gesteuerten Ofen wären diese Aspekte beispielsweise das Messen (Erfassen) der Temperatur und Einstellen (Verändern) der Leistung.

Erfindungsgemäß werden diese Zustände in mehrere Faktoren zerlegt, da beispielsweise bei einem Steuerprogramm nicht einfach der Arbeitsspeicher des jeweiligen Programms verglichen werden kann, sondern eine strukturierte Vorgehensweise erforderlich ist. Bei einem Roboterarm wird beispielsweise die konkrete Armposition als Vektor aus verschiedenen Winkeln ausgedrückt.

Ein Anlagenzustand z wird erfindungsgemäß in eine Menge von Name/Wert-Paare (n, v) zerlegt. Formal ausgedrückt: $z = \{(n_1, v_1), (n_2, v_2), ...\}$. In der Praxis ist n typischerweise der Name einer Variablen und v ihr Wert in diesem Programm- bzw. Anlagenzustand z. (n, v) beschreibt alternativ eine Position n der Eingabe mit dem Wert v.

Die Differenz $\Delta(z_1, z_2)$ zwischen zwei Zuständen ist genau die Menge der Namen, deren Wert sich in $z_1$ und $z_2$ unterscheidet. Formal lässt sich dies folgendermaßen darstellen:

$$\Delta(z_1, z_2) = \{(n, v_1, v_2)|(n, v_1) \in z_1 \wedge (n, v_2) \in z_2 \wedge v_1 \neq v_2\}$$

Es gilt dabei $\Delta(z, z) = \varnothing$.

Ein Element $\Delta_i = (n, v_1, v_2)$ aus $\Delta = \{\Delta_1, \Delta_2, ...\}$ wird im folgenden als Delta bezeichnet. Ein Delta $\Delta_i = (n, v_1, v_2)$ kann auf den Anlagenzustand $z_1$ angewandt werden. Das Ergebnis der Anwendung ist der Zustand $z_1$, in dem statt $(n, v_1)$ der Wert $(n, v_2)$ enthalten ist. Dies lässt sich formal folgendermaßen darstellen:

$$\Delta_i(z_1)=\{(n',v')|(n',v') \in z_1 \wedge (n', v') \neq (n_1, v_1)\} \cup \{(n, v_2)\}$$

mit $\Delta_i = (n, v_1, v_2)$. In anderen Worten, $\Delta_i$ setzt in $z_1$ den Wert der Variablen n auf $v_2$.

Werden alle Deltas aus $\Delta(z_1, z_2)$ auf $z_1$ angewandt, so erhält man $z_2$. Dies lässt sich formal folgendermaßen darstellen:

Sei $\Delta(z_1, z_2) = \{\Delta_1, \Delta_2,..., \Delta_n\}$, so gilt $\Delta_1(\Delta_2(...(\Delta_n(z_1))...)) = z_2$.

Vergleichen dynamischer Datenstrukturen

Die bisher beschriebene Differenz $\Delta$ setzt voraus, daß die Mengen der Variablen in den Zuständen $z_1$ und $z_2$ gleich sind. Sofern während der Laufzeit neue Variablen (mit neuen Namen) generiert oder zerstört werden, müßte die Differenz um Deltas erweitert werden, die neue Variablennamen generieren bzw. zerstören.

Weiterhin setzt die bisher beschriebene Differenz voraus, daß jede Variable genau einen eindeutigen Namen hat. Bei *verzeigerten Datenstrukturen* ist dies jedoch nicht unbedingt der Fall; vielmehr kann ein und derselbe (Variablen-)Wert unter verschiedenen (Variablen-)Namen angesprochen werden. Hier muß die Differenz um Deltas erweitert werden, die Referenzen und Zeiger anpassen.

Beide Probleme werden gelöst, indem der Programmzustand nicht als Abbildung von Variablennamen auf Werte modelliert wird, sondern als *Graph,* dessen Knoten für Werte und Kanten für Variablen und Beziehungen stehen. Die Unterschiede zwischen zwei Zuständen werden so zu Unterschieden zwischen zwei Graphen.

Details dieser erweiterten Modellierung werden in Beispiel 4 aufgeführt. Zur Vereinfachung der Darstellung gehen wir hier jedoch zunächst wie bisher davon aus, daß die Menge der Variablen fest ist und jeder Wert unter genau einem Variablennamen angesprochen werden kann.

Minimierung

Zur Minimierung der fehlerverursachenden Unterschiede wird eine Testfunktion *test(c)* verwendet. Die Testfunktion *test*(c) bestimmt für eine bestimmte Konfiguration c, ob der Fehler auftritt (**x**), ob der Fehler nicht auftritt (✔), oder ob sich diese Frage nicht entscheiden lässt (**?**). Eine Programm- bzw. Anlagenkonfiguration c ist eine Untermenge

der Differenz $\Delta(z_1, z_2)$, oder - formal - $c \subseteq \Delta(z_1, z_2)$. Es wird angenommen, dass der Zustand $z_2$ zu einem Fehler führt, der Zustand $z_1$ jedoch nicht. Dann gilt $test(\varnothing) = ✔$ und $test(\Delta(z_1, z_2)) = \boldsymbol{x}$. Praktisch bedeutet dies, dass zunächst der Programm- bzw. Anlagenzustand $z_1$ hergestellt wird (durch Ablaufen lassen eines fehlerfreien Laufes A über eine gewisse Zeit), danach die in der Konfiguration übergebenen Deltas angewandt werden (d.h. die Variablenwerte werden von $z_2$ (fehlerhafter Lauf B) nach $z_1$ (fehlerfreier Lauf A) übertragen) und abschließend wird durch Weiterausführung des Ablaufs der Testausgang ($\boldsymbol{x}$, ✔ , ?) bestimmt. Der Sonderfall ? tritt dann auf, wenn der Anlagenzustand nicht erreichbar ist (beispielsweise eine physikalisch unmögliche Stellung eines Roboterarmes) oder nicht geprüft werden kann, ob der Fehler aufgetreten ist oder nicht.

Damit die Testfunktion und somit das gesamte erfindungsgemäße Verfahren ablaufen kann, ist zunächst eine beobachtbare Eigenschaft des Programm- bzw. Anlagenzustands anzugeben (z.B.: "Das Steuerprogramm ist in der Funktion $f_{42}$ abgestürzt"), d.h. es ist der Fehler anzugeben, nach dessen Ursache überhaupt gesucht werden soll.

Der gemäß einer bevorzugten Ausführungsform für die Minimierung verwendete Algorithmus lautet wie folgt:

$$dd_2(c_✓,c_x,n) = \begin{cases} dd´_2(c_✓, c_✓ \cup c_i,2) & \text{wenn } \exists c_i \cdot test(c_✓ \cup c_i) = \boldsymbol{x} \\ dd´_2(c_x - c_i, c_x,2) & \text{wenn } \exists c_i \cdot test(c_x - c_i) = ✔ \\ dd´_2(c_✓ \cup c_i, c_x,\max(n-1,2)) & \text{wenn } \exists c_i \cdot test(c_✓ \cup c_i) = ✔ \\ dd´_2(c_✓, c_x - c_i,\max(n-1,2)) & \text{wenn } \exists c_i \cdot test(c_x - c_i) = \boldsymbol{x} \\ dd´_2(c_✓, c_x ,\min(2n,|c_x| - |c_✓|)) & \text{wenn } n < (|c_x| - |c_✓| \\ (c_✓, c_x) & \text{sonst} \end{cases}$$

wobei $c_✓' = Uc_i$ mit $c_i$ paarweise disjunkt sowie $\forall c_i(|c_i| \approx |c_✓'|/n)$ ist.

Dieser Algorithmus liefert ausgehend von $\Delta(z_1, z_2)$ zwei Untermengen $c'_✓$ und $c'_x$ mit einem sogenannten 1-minimalen Unterschied. Dies bedeutet, dass jeder verbliebene Unterschied zwischen $c'_✓$ und $c'_x$ relevant ist für das Auftreten des Fehlers. In anderen Worten, jeder Unterschied ist Ursache des Fehlers.

Formal bedeutet dies, dass ausgehend von zwei Konfigurationen $c_✓ = \varnothing$ und $c'_x = \Delta(z_1, z_2)$ ein Tupel ($c'_✓$, $c'_x$) = $dd(c_x)$ geliefert wird mit $c_✓ \subseteq c'_✓ \subseteq c'_x \subset c_x$, $test(c'_✓) = ✔$ , $test(c'_x) = \boldsymbol{x}$ und $|c'_x| - |c'_✓|$ minimal.

Vorzugsweise werden die Werte $z_2$ aus einem anderen Lauf (B) des Programms nicht direkt übernommen, sondern mittels einer Rechenvorschrift erzeugt, in die Programmzustände aus dem fehlerhaften Lauf (B) eingehen. Dies bedeutet, dass die Werte aus B nicht unmittelbar übernommen werden, sondern verändert werden. Unter "Rechenvorschrift" ist eine zufällige Veränderung zu verstehen, wobei auch anhand des Programmtextes generierte und veränderte Werte als "Rechenvorschrift" angesehen werden. Alternativ dazu stammen die Werte $z_2$ aus mehreren anderen Läufen (B, C, D, ...) des Programms. Als weitere Alternative werden die Werte $z_2$ aus einer Rechenvorschrift erzeugt, in die Programmzustände aus dem fehlerfreien Lauf (A) eingehen. Letztere Alternative ist dann von Vorteil, wenn kein fehlerhafter Lauf zur Verfügung steht. Mit dieser Alternative kann aus dem fehlerfreien Lauf A durch gezieltes Verändern der Werte ein fehlerhafter erzeugt werden.

Weiter bevorzugt werden die Werte $z_1$ aus einem fehlerfreien Lauf (A) des Programms nicht direkt übernommen, sondern mittels einer Rechenvorschrift erzeugt, in die Programmzustände aus dem fehlerfreien Lauf (A) eingehen. Alternativ dazu stammen die Werte $z_1$ aus mehreren anderen fehlerfreien Läufen des Programms. Weiter Alternativ werden die Werte $z_1$ aus einer Rechenvorschrift erzeugt, in die Programmzustände aus dem fehlerhaften Lauf (B) eingehen. Letztere Alternative ist dann von Vorteil, wenn kein fehlerhafter Lauf zur Verfügung steht. Mit dieser Alternative kann aus dem fehlerfreien Lauf A durch gezieltes Verändern der Werte ein fehlerhafter erzeugt werden.

Synchronisationspunkte

Bisher wurde erläutert, wie sich erfindungsgemäß Anlagenzustände bestimmen lassen, wie sich ihre Unterschiede bestimmen lassen und wie sich diese Unterschiede minimieren lassen. Im folgenden wird nun beschrieben, zu welchen Zeitpunkten die Unterschiede in den Programm- bzw. Anlagenzuständen bestimmt und minimiert werden.

Grundsätzlich lassen sich bei zwei Abläufen A und B beliebige Zustände aus A und B vergleichen, da sich diese wegen des deterministischen Ablaufs stets unterscheiden und stets ein minimaler fehlerverursachender Unterschied bestimmbar ist. Vorzugsweise werden jedoch Synchronisationspunkte verwendet, d.h. solche Anlagenzustände, die von vornherein große Übereinstimmung erwarten lassen. In einem imperativen Steuerprogramm ist dies z.B. dann der Fall, wenn der Backtrace (Aufrufstapel der Funktionen) identisch ist, weil dann bereits die Menge der zu untersuchenden Variablen identisch ist. Sind die Backtrace-Folgen der Programmläufe A und B gegeben, lassen sich Synchronisationspunkte als längste gemeinsame Teilfolge angeben.

Vorzugsweise wird als erster Synchronisationspunkt der Ablaufstart gewählt. Daraufhin wird die Folge der Synchronisationspunkte durch 2, 4, 8 etc. geteilt, um jeweils an den Enden der Folgen den fehlerverursachenden Unterschied zu bestimmen. Durch diese Unterteilung wird eine immer feinere Abdeckung erreicht. Alternativ dazu kann eine gewichtete Abdeckung erfolgen, etwa in der Nähe des fehlerhaften Zustands.

In der Regel genügen etwa 10 Synchronisationspunkte, um eine aussagekräftige Ursache-Wirkungs-Kette (mit dann 10 Punkten) zu bestimmen.

Vorzugsweise wird das erfindungsgemäße Verfahren hier durch Program Slicing ergänzt, wodurch gegebenenfalls von vorneherein Synchronisationspunkte ausgelassen werden können, die keine weitere Zustandsänderung erwarten lassen.

Das erfindungsgemäße Verfahren ist mit dem Vorteil verbunden, dass es im Vergleich zu Verfahren der statischen Programmanalyse nicht nur potentielle, sondern tatsächliche Fehlerursachen liefert und somit eine wesentlich schnellere und präzisere Fehlerlokalisierung ermöglicht. Ferner arbeitet das erfindungsgemäße Verfahren zum Bestimmen von Ursache-Wirkungs-Ketten automatisch. Es wird lediglich eine Testfunktion benötigt, die korrekte von falschen Abläufen unterscheidet. Im Fall von Anlagensteuerungen bzw. Ablaufsteuerungen sind solche Testfunktionen ohnehin Bestandteil von automatischen Tests und somit oftmals ohnehin vorhanden. Ansonsten sind solche Testfunktionen einfach zu erstellen, wenn die geeignete Sensorik vorhanden ist.

Das erfindungsgemäße Verfahren liefert auch für einen Nicht-Experten, d. h. einen Anwender, der mit dem Fach, aber nicht mit der untersuchten Anlage vertraut ist, eine kompakte Beschreibung der fehlerrelevanten Anlagenvorgänge.

Das erfindungsgemäße Verfahren läßt sich grundsätzlich für beliebige Computerprogramme bzw. technische Anlagen verwenden. Das erfindungsgemäße Verfahren läßt sich bei jedem Programmfehler anwenden, für den es einen ähnlichen, funktionierenden Programmlauf als Referenz gibt - kurz: Bei jedem Programmfehler "weitgehend korrekter" Software.

Das erfindungsgemäße Verfahren ist außerdem für beliebige elektronische Bausteine (chips, ASICs etc.) anwendbar, sofern ein Zugang zum internen Zustand des Bausteins existiert. Während der Entwicklung werden Chips zunächst als Software simuliert, so dass beispielsweise dadurch Zugang zum internen Zustand gegeben ist.

Die Erfindung wird nun anhand von Beispielen näher erläutert. In den beigefügten Zeichnungen zeigen:

Fig. 1    eine schematische Darstellung der Wirkungsweise des erfindungsgemäßen Verfahrens; und

Fig. 2    eine beispielhafte Anwendung des erfindungsgemäßen Verfahrens in einer Backstrasse.

Das erfindungsgemäße Verfahren wird nun anhand einiger Beispiele näher erläutert.

Beispiel 1

Das erfindungsgemäße Verfahren wird im folgenden anhand eines einfachen Sortierprogramms veranschaulicht:

```
/* sample.c -- Sample C program to be debugged with DDD */

#include <stdio.h>
#include <stdlib.h>

static void shell_sort(int a[], int size)
{
    int i, j;
    int h = 1;
    do {
        h = h * 3 + 1;
    } while (h <= size);
    do {
        h /= 3;
        for (i = h; i < size; i++)
        {
            int v = a[i];
            for (j = i; j >= h && a[j - h] > v; j -= h)
                a[j] = a[j - h];
            if (i != j)
                a[j] = v;
        }
    } while (h != 1);
}

int main(int argc, char *argv[])
{
    int *a;
    int i;

    a = (int *)malloc((argc - 1) * sizeof(int));
    for (i = 0; i < argc - 1; i++)
        a[i] = atoi(argv[i + 1]);

    shell_sort(a, argc);

    printf("Output: ");
    for (i = 0; i < argc - 1; i++)
        printf("%d ", a[i]);
    printf("\n");

    free(a);

    return 0;
}
```

Diese Programm hat einen Fehler. Eigentlich sollte das Programm seine Argumente numerisch sortieren und ausgeben wie folgt (Lauf A):

```
$ gcc -g -o sample sample.c
$ ./sample 9 8 7
Output: 7 8 9
$ _
```

Bei bestimmten Argumenten ist die Ausgabe jedoch fehlerhaft (Lauf B):

```
$ ./sample 11 14 13 16
Output: 0 11 13 14
$ _
```

Obwohl die Ausgabe tatsächlich sortiert ist und auch die richtige Anzahl Argumente enthält, ist eine Zahl (16) durch eine Zufallszahl (0) ersetzt worden.

Zur Veranschaulichung des Verfahrens wird ein Synchronisationspunkt in Zeile 8 angenommen - also direkt im Aufruf von shell_sort. Wird nun in den Läufen A und B der Programmzustand untersucht, erhält man die folgende Tabelle:

| Variable | Wert in A | Wert in B | Delta |
|---|---|---|---|
| main | main | main | |
| fini | _fini | _fini | |
| init | _init | _init | |
| rtld_fini | _dl_fini | _dl_fini | |
| argc | 4 | 5 | ja |
| argv[0] | "./sample" | "./sample" | |
| argv[1] | "9" | "11" | ja |
| argv[2] | "8" | "14" | ja |
| argv[3] | "7" | "13" | ja |
| argv[4] | 0x0 | "16" | ja |
| argv[5] | "SHELL=/bin/sh" | 0x0 | ja |
| a[0] | 9 | 11 | ja |
| a[1] | 8 | 14 | ja |
| a[2] | 7 | 13 | ja |
| a[3] | 2009 | 16 | ja |
| size | 4 | 5 | ja |
| i in main | 3 | 4 | ja |
| i in shell_sort | 1074835916 | 1074835916 | |
| j | 0 | 0 | |
| h | 10 | 10 | |

Mehr als die Hälfte der Variablen hat unterschiedliche Werte (gekennzeichnet in der Spalte "Delta"), aber nur ein Teil dieser Werte ist tatsächlich für den unterschiedlichen Testausgang relevant.

Die relevanten Werte werden durch das eingangs beschriebene Delta-Debugging-Verfahren bestimmt, das systematisch Teilmengen der Variablenwerte in A auf die entsprechenden Werte in B setzt und bestimmt, ob der Testausgang dadurch beeinflusst wird oder nicht. Tritt nach der Änderung der Fehler auf, ist die Änderung relevant für den Fehler.

Wie bereits beschrieben, wird für den automatischen Ablauf von Delta-Debugging eine test-Funktion verwendet, die diesen Fehler erkennt. Dies ist in diesem Beispiel eine Funktion, die **x** zurückgibt, wenn das Ergebnis eine 0 enthält, ✔ , wenn das Ergebnis 7 8 9 oder 11 13 14 16 ist, und **?** in allen anderen Fällen. Als Ergebnis für das hier beschriebene Beispiel ist die Variable size von 4 auf 5 zu ändern, um den Fehler verschwinden zu lassen. Die Größe des Feldes ist also die Fehlerursache, während alle anderen Unterschiede irrelevant sind (z.B. der Inhalt des Feldes a).

Bei Anwendung des Delta-Debugging-Verfahrens an weiteren Synchronisationspunkten (beispielsweise der Beginn von main und dem Ende von shell_sort), werden weitere Elemente der Ursache-Wirkungs-Kette ausgegeben:

```
== Causality Report ==


failing run (args: 11 14 13 16):

argc at main is 5

therefore size at shell_sort is 5

therefore a[0] at (´sample.c´, 37) is 0

therefore: fail


passing run (args: 9 8 7):

argc at main is 4

therefore size at shell_sort is 4



 therefore a[0] at (´sample.c´, 37) is 7

 therefore: pass
```

Im fehlerhaften Lauf (1. Teil) ist zunächst also argc (die Anzahl der Argumente) 5. Dies bewirkt eine Größe von 5 mein Aufruf von shell_sort. Dies wiederum bewirkt, dass a [0] den Wert 0 erhält - was den Fehler verursacht. Wie der funktionierende Programmlauf (2. Teil) zeigt, läuft das Programm hingegen, wenn argc den Wert 4 hat.

Um den Fehler zu korrigieren, ist die Ursache-Wirkungs-Kette nun zu unterbrechen. Dazu ist in den einzelnen Schritten zu prüfen, ob die ausgegebenen Ergebnisse korrekt sind. Während argc korrekt ist, hat size (die Größe des zu sortirenden Feldes) einen um 1 zu hohen Wert. Das Feld a hat nicht 5, sondern nur 4 Elemente. Dieser Fehler wird korrigiert, indem in Zeile 35

     schell_sort (a, argc); in die korrekte Fassung
     shell_sort (a, argc - 1); abgeändert wird.


Beispeil 2

Als weiteres Beispiel für die erfindungsgemäße Kausalitätsanalyse dient nun die in Fig. 2 dargestellte Backstrasse, mit des Brot hergestellt wird. Der geformte Teig wird von einem Förderband durch den Ofen transportiert. Zur Qualitätssicherung prünft am Ende ein Infrarot-Sensor den Bräunegrad des Backwerks.

Nun tritt folgendes Problem auf: An manchen Tagen geraten die Brote zu dunkel, ohne dass ein Grund dafür ersichtlich ist. Mit Hilfe der erfindungsgemäßen Kausalitätsalnalyse wird der Fehler gefunden und das Problem behoben.

Die Backstrasse wird durch drei Programme gesteuert: Hauptsteuerung, Förderband-und Ofensteuerung, die hier skizzenhaft in der Programmiersprache C wiedergegeben sind. Die drei Programme kommunizieren über die folgenden gemeinsamen Variablen

```
char day_of_week[8];      /* Wochentag, z.B. "monday" */

char slow_conveyor;       /* ´y´ = langsame Bandgeschwindigkeit */

char low_temperature;     /* ´y´ = reduzierte Temperatur */

char save_energy;         /* ´y´ = Energie sparen */

char power ;              /* ´y´ = Anlage in Betrieb */
```

Die Hauptsteuerung stellt die Parameter für die Backstrasse anhand des Wochentags und der Auslastung: Bei geringer Auslastung wird der Ofen im Energiesparmodus gefahren.

```
if (save_energy == ´y´)
{
    /* Energiesparmodus: länger backen mit niedrigerer Tempera-
    tur */
    slow_conveyor = ´y´;
    low_temperature = ´y´;
}
else
{
    slow_conveyor = ´n´;
    low_temperature = ´n´;
}
/* Aktuellen Wochentag nach ´day_of_week´ speichern */   /* #1 */
get_day_of_week(day_of_week);
if (strcmp(day_of_week, "Sunday") == 0)
{
    /* Sonntags ist die Anlage aus */
    power = ´n´;
}                                                        /* #2 */
```

Die Förderbandsteuerung prüft in einer Endlosschleife die Parameter und regelt das Förderband entspre-chend:

```
        while (1) {
                if (power == ´y´) {
                        if (slow_conveyor == ´y´) {
                                /* Förderband langsam betreiben */
                        }
                        else {
                                /* Förderband normal betreiben */
                        }
                }
                else {
                        /* Förderband abschalten */
                }
        }
```

Analog dazu regelt die Ofensteuerung den Ofen anhand der Einstellungen:

```
    while (1) {
            if (power == ´y´) {
            if (low_temperature == ´y´) {
                    /* Ofen mit niedriger Temperatur betreiben */
            }
            else {
                    /* Ofen mit normaler Temperatur betreiben */
            }
        }
        else {
            /* Ofen abschalten */
        }
    }
```

Bei den folgenden zwei Läufen sind unterschiedliche Umstände gegeben:

| Umstand | Lauf 1 | Lauf 2 | Delta |
|---|---|---|---|
| Wochentag | Montag | Mittwoch | $\delta_1$ |
| Durchsatz | 40 Stück/Minute | 20 Stück/Minute | $\delta_2$ |
| Backmischung | Roggenbrot | Weizenmischbrot | $\delta_3$ |
| Betriebsart | Normal | Energiesparmodus | $\delta_4$ |
| Ergebnis | ✔ | ✘ | |

Der Montags-Roggenbrot-Lauf lieferte einwandfreie Qualität, der Mittwoch-Weizenmischbrot-Lauf schlug hingegen fehl.

Nun wird zunächst Delta-Debugging auf die Eingabe (= obige Umstände) angewandt, um den fehlerverursachenden Unterschied zu isolieren. Jedem Unterschied ist dabei ein $\delta_i$ zugeordnet, wie oben beschrieben; die leere Menge Ø entspricht dem funktionierenden Lauf 1 und $\{\delta_1, \delta_2, \delta_3, \delta_4\}$ dem fehlgeschlagenen Lauf 2.

Die Testfunktion *test* nimmt eine Menge dieser Unterschiede $\delta_i$, wendet sie auf den funktionierenden Lauf 1 an und stellt die Backstrasse entsprechend ein. *test*$\{\delta_3, \delta_4\}$ etwa würde die Anlage auf die von Lauf 1 vorgegebenen Werte Montag und 40 Stück/Minute einstellen und dann die Änderungen für Weizenmischbrot ($\delta_3$) und Energiesparmodus ($\delta_4$) anwenden. *test* nutzt den Infrarot-Sensor, um das Backergebnis zu beurteilen: *test* gibt ✔ zurück, wenn das Backwerk einwandfrei ist, und **x**, wenn das Backwerk nicht einwandfrei ist. Wenn die Anlage nicht in der gewünschten Konfiguration betrieben werden kann, gibt *test* **?** zurück. Dies ist beispielsweise in der Konfiguration test$\{\delta_3, \delta_4\}$ der Fall: Im Energiesparmodus ist ein Durchsatz von 40 Stück/Minute nicht zu erzielen.

Der Delta-Debugging-Algorithmus bestimmt nun die fehlerverursachende Eingabe

$$dd(\{\delta_1, \delta_2, \delta_3, \delta_4\}) \quad = dd'(\varnothing, \{\delta_1, \delta_2\}) \quad \text{weil } test\{\delta_1, \delta_2\}) = ✘$$

$$= dd'(\varnothing, \{\delta_1\}) \quad \text{weil } test\{\delta_1\}) = ✘$$

$$= \{\varnothing, \delta_1\}$$

und es stellt sich heraus, dass allein der Wochentag für das dunkle Brot relevant ist. Weder Durchsatz, Backmischung noch Betriebsart haben einen Einfluß:

| Umstand | Lauf 1 | Lauf 2 | Delta |
|---|---|---|---|
| Wochentag | Montag | Mittwoch | $\delta_1$ |
| Durchsatz | 40 Stück/Minute | 40 Stück/Minute | |
| Backmischung | Roggenbrot | Roggenbrot | |
| Betriebsart | Normal | Normal | |
| Ergebnis | ✔ | ✘ | |

Auf der Grundlage von diesem Ergebnis lässt sich nun unter Verwendung der erfindungsgemäßen Kausalitätsanalyse feststellen, warum der Wochentag die Brotqualität beeinflusst. Dazu wird die Ursache-Wirkungs-Kette im Steuerungsprogramm betrachtet. Der Einfachheit halber wird nun von zwei Läufen ausgegangen, die sich nur noch im Wochentag unterscheiden.

Da die Menge der Variablen in beiden Läufen gleich ist, ist jeder Programmzustand als Synchronisationspunkt

EP 1 291 775 A1

geeignet. Hier werden die beiden Punkte als Synchronisationspunkte verwendet, die mit #1 und #2 gekennzeichnet sind.

Im Zustand #1 findet die Kausalitätsanalyse in beiden Läufen gleiche Variablenbelegung. Nur die (system-interne) Variable _day_of_week hat einen unterschiedlichen Wert.

| Variable | Lauf 1 | Lauf 2 | Delta |
|---|---|---|---|
| _day_of_week | „Monday" | „Wednesday" | $\delta_1$ |
| day_of_week | "" | "" | |
| slow_conveyor | ´n´ | ´n´ | |
| low_temperature | ´n´ | ´n´ | |
| save_enery | ´n´ | ´n´ | |
| power | ´y´ | ´y´ | |
| Ergebnis | ✔ | ✘ | |

Im Zustand #2 geht die Systemuhr in den Programmzustand ein:

| Variable | Lauf 1 | Lauf 2 | Delta |
|---|---|---|---|
| _day_of_week | „Monday" | „Wednesday" | $\delta_1$ |
| day_of_week | "Monday" | "Wednesda" | $\delta_2$ |
| slow_conveyor | ´n´ | ´y´ | $\delta_3$ |
| low_temperature | ´n´ | ´n´ | |
| save_enery | ´n´ | ´n´ | |
| power | ´y´ | ´y´ | |
| Ergebnis | ✔ | ✘ | |

Anhand der letzten Tabelle wird das Problem deutlich. In Lauf 2 ist day_of_week übergelaufen: "Wednesday" hat neun Buchstaben, day_of_week fasst jedoch nur 8. Deshalb ist der letzte Buchstabe 'y' in slow_conveyor verschoben.

In einer realen Anlagensteuerung ist eine solch schnelle Diagnose nicht ohne weiteres möglich, da eine viel größere Anzahl Variablen geprüft und verglichen werden. Mit der erfindungsgemäßen Kausalitätsanalyse wird ein vollständiges Bild erhalten.

Im Zustand #1 liegt genau ein Unterschied vor, nämlich den in _day_of_week, und dieser hat sich bereits als fehlerverursachend herausgestellt. Bleibt Zustand #2 mit drei Unterschieden $\delta_1$, $\delta_2$, $\delta_3$. Die Frage ist, welcher dieser Unterschiede fehlerrelevant ist.

In diesem Fall wird eine Testfunktion benötigt, die im Zustand #2 den Lauf 1 unterbricht, die gegebenen Unterschiede zu Lauf 2 anwendet, den Lauf fortsetzt und - wie gehabt - das Ergebnis mit Hilfe des Sensors prüft.

_test_{$\delta_1$,$\delta_2$}) etwa würde in Lauf 1 die Variable _day_of_week von "Monday" auf "Wednesday" setzen ($\delta_1$) sowie die Variable day_of_week von "Monday" auf "Wednesda" ($\delta_2$). Anschließend würde der Lauf fortgesetzt und geprüft, ob die Änderung Auswirkungen auf die Brotqualität hatte.

Als Teil der Kausalitätsanalyse bestimmt der Delta-Debugging-Algorithmus nun für diesen Programmzustand die Fehlerursache. Es stellt sich heraus, dass die Änderung {$\delta_1$,$\delta_2$} den Fehler nicht verursacht...

$$dd(\{\delta_1, \delta_2, \delta_3,\}) \qquad = dd'(\{\delta_1,\delta_2\},\{\delta_1, \delta_2, \delta_3\}) \qquad \text{weil } test\{\delta_1,\delta_2\}) = ✔$$

$$= (\{\delta_1,\delta_2\},\{\delta_1, \delta_2, \delta_3\})$$

... und somit bleibt nur noch die Änderung $\delta_3$ , also das Herabsetzen der Förderbandgeschwindigkeit in slow_conveyor übrig. Dies ist nicht überraschend: Wenn das Brot mit herabgesetzter Geschwindigkeit, aber normaler Temperatur durch den Ofen rollt, wird es zu lange der Hitze ausgesetzt und somit dunkel.

Der von dem erfindungsgemäßen Verfahren automatisch generierte Bericht sieht wie folgt aus:

```
== Causality Report ==


failing run (args: wednesday):
_day_of_week at (´bakery.c´, 37) is "wednesday"
therefore slow_conveyor at (´bakery.c´, 41) is ´y´
therefore: fail


passing run (args: monday):
_day_of_week at (´bakery.c´, 37) is "monday"
therefore slow_conveyor at (´bakery.c´, 41) is ´n´
therefore: pass
```

Hier ist noch einmal die Ursache-Wirkungs-Kette aufgeführt: Erst ist der Wochentag unterschiedlich, anschließend die Variable slow_conveyor. Alles andere ist irrelevant. Dies stellt die Kausalitätsanalyse mit geringem Aufwand automatisch fest.

Beispiel 3

Im folgenden wird ein Beispiel für eine *test*-Funktion aus der erfindungsgemäßen Kausalitätsanalyse gegeben. Die Funktion *test* erhält eine Liste von Deltas, jede davon ein Tripel (*var*, $value_✓$ , $value_x$). Hierbei ist *var* der Name der Variablen, $value_✓$ ihr Wert im funktionierenden Lauf, $value_x$ ihr Wert im fehlschlagenden Lauf.
*test* ruft delta_cmds auf, um aus den Deltas eine Liste von Debugger-Befehlen der Form set variable.var = $value_x$ zu erzeugen. Diese werden mit der Funktion gdb_send auf den funktionierenden Lauf angewandt.
Anschließend wird das Programm ausgeführt (run()). Die Ausgabe (output) wird auf Auftreten des Fehlers geprüft (hier: Auftreten der Ziffer 0). Tritt der Fehler auf, ist der Rückgabewert ✓ (PASS). Bei leerer Ausgabe (= vorzeitiges Programmende) ist der Rückgabewert ? (UNRESOLVED).
Für eine vollständige Implementierung müssen noch die Funktionen run() und gdb_send() implementiert werden. Außerdem muss die ursprüngliche Menge der Unterschiede (deltas) bestimmt werden, mit der dann *dd* (als dd (deltas)) aufgerufen wird.

```
def delta_cmd(deltas):
    cmds = [ ]
    for delta in deltas:
        (var, value__pass, value_fail = delta
        cmds.append("set variable " + var + " = " + value_fail)

    return cmds



            def test(deltas):
                gdb_send(delta_cmds(deltas))
                output = run()
                if output.index('0') > 0:
                    return FAIL
                elif output != "":
                    return PASS
                else:
                    return UNRESOLVED
```

Beispiel 4

Abschließend betrachten wir ein Beispiel, das zeigt, wie in der Programmiersprache C Unterschiede zwischen dynamischen Datenstrukturen bestimmt und angewandt werden können.

Ein C-Programm unterhält eine einfach verkettete sortierte Liste von Zahlenwerten, auf deren erstes Element die Zeigervariable list zeigt. Die Deklaration von list könnte etwa so aussehen:

```
struct Listelem {
    int value;              /* Wert */
    struct Listelem *next;  /* nächstes Listenelement */
} *list;
```

Betrachten wir nun einen Programmlauf *A*. Durch fortgesetztes Dereferenzieren von list und seiner Folgeelemente erhält man in *A folgende Werte:*

| Variably | Lauf *A* |
|---|---|
| list→value | 14 |
| list→next→value | 18 |
| list→next→next→value | 22 |

Hierbei steht die C-Notation z->e für das Element e des Verbundes, auf den der Zeiger z zeigt. Als Graph ergibt sich folgende Struktur:

**24**

In Lauf B hingegen enthält die Liste ein weiteres Element - die Zahl 15:

| Variable | Lauf $B$ |
|---|---|
| list->value | 14 |
| list->next->value | 15 |
| 1ist->next->next->value | 18 |
| list->next->next->next->value | 22 |

Hier wird deutlich, daß wir das Verfahren, wie bisher beschrieben, nicht unmittelbar anwenden können - die Variable list ->next->next->next->value etwa existiert in Graph *A* nicht. Als Graph sieht die Liste wie folgt aus:

Um die Unterschiede zwischen den zwei Graphen zu bestimmen, verwenden wir ein Verfahren, das den *größten gemeinsamen Subgraphen* (oder eine Annäherung) bestimmt[1]. Zwei Knoten sind genau dann aufeinander abgebildet (oder "äquivalent"), wenn ihre Werte gleich sind und sie die gleichen Ein- und Ausgangskanten haben.
Als Ergebnis erhalten wir eine Abbildung der gleichen Werte in Graph *A* und in Graph B (hier durch gestrichelte Linien dargestellt):

Um nun die Unterschiede von Graph *A* zu Graph B zu bestimmen, benötigen wir drei Schritte, die jeweils einmal einen Graph durchlaufen:

**1. (Elemente anpassen und anlegen)** Für jedes Element $e_b$ in Graph B, das kein äquivalentes Element in Graph *A* hat (es also keine Abbildung gibt), wird ein $\Delta_i$ angelegt, das dieses Element in Graph *A* anlegt; $_{eb}$ wird auf das neue Element $_{ea}$ abgebildet. Am Ende dieses Schrittes gibt es für jedes Element $_{eb}$ aus B ein äquivalentes Element in *A*. In unserem Beispiel wäre dies ein $\Delta_1$, das einen neuen Verbund anlegt,

[1]Ina Koch, "Enumerating all connected maximal common subgraphs in two graphs", Theoretical Computer Science 250 (2001) 1.30

- dessen Wert 15 ist, und
- dessen Zeiger next auf den Verbund mit dem Wert 18 zeigt.

Nach Anwendung von $\Delta_1$ sähen die Graphen also so aus:

**2. (Zeiger anpassen)** Für jeden Zeiger $z_b$ in Graph B bestimmen wir den äquivalenten Zeiger $z_a$ in Graph *A*. Sei $z'_b$ das Element, auf das $z_b$ zeigt; analog sei $z'_a$ das Element, auf das $z_a$ zeigt. Gibt es kein $z'_a$ oder sind $z'_a$ und $z'_b$ nicht äquivalent, wird ein $\Delta_i$ angelegt, das den Zeiger $z_a$ auf das zu $z'_b$ äquivalente Element setzt.

In unserem Beispiel betrachten wir den Fall $z_b = z_a$ = list->next. Hier hat $z'_b$ den Wert 15, $z'_a$ jedoch den Wert 18. Deshalb wird ein $\Delta_2$ angelegt, das list->next auf das mit $\Delta_1$ neu angelegte, zu $z'_b$ äquivalente Element setzt.

Nach Anwendung von $\Delta_1$ und $\Delta_2$ sind die Graphen *A* und B gleich:

**3. (Elemente entfernen)** Für jedes Element $e_a$ in Graph *A*, das kein äquivalentes Element in Graph B hat (es also keine Abbildung gibt), wird ein $\Delta_i$ angelegt, das dieses Element in Graph *A* entfernt; Zeiger, die auf das Element zeigen, werden auf einen definierten ungültigen Wert gesetzt (etwa NULL bei C-Programmen).

In unserem Beispiel gibt es keine solchen Werte. Würde man aber umgekehrt die Unterschiede von Graph B zu Graph *A* bestimmen, würde in diesem Schritt das Element list->next mit Wert 15 entfernt werden. Der Zeiger list auf das Element wäre bereits in Schritt 2 angepaßt worden.

Das Ergebnis in unserem Beispiel sind somit zwei Deltas $\Delta_1$ und $\Delta_2$, wobei $\Delta_1$ ein Element mit Wert 15 anlegt und $\Delta_2$ den entsprechenden Zeiger anpaßt. Auf eine weitere Formalisierung von $\Delta_i$ verzichten wir hier; die entsprechenden Debugger-Befehle gemäß Beispiel 3 wären jedoch wie folgt:

- für $\Delta_1$:

```
set variable $m1 = malloc(sizeof(struct Listelem))
set variable $m1->value = 15
set variable $m1->next = list->next
```

- für $\Delta_2$:

```
set variable list->next = $m1
```

Hierbei legt die C-Funktion malloc ausreichend Speicher für das neue Listenelement an; $m1 ist eine Debugger-Variable, in der wir die Adresse des neu angelegten Speichers ablegen.

Nach Anwendung obiger Debugger-Befehle in Lauf *A* haben alle Variablen denselben Wert wie in Lauf B:

| Variable | Lauf *A* (mit $\Delta_1$, $\Delta_2$) | Lauf *B* |
|---|---|---|
| list->value | 14 | 14 |
| list->next->value | 15 | 15 |
| list->next->next->value | 18 | 18 |
| list->next->next->next->value | 22 | 22 |

Somit stellen neu angelegte oder gelöschte Variablen kein Problem mehr für die Kausalitätsanalyse dar. Ist das Anlegen oder Löschen fehlerrelevant, können entsprechende Deltas genauso bestimmt werden wie die bisher besprochenen *werteverändemden* Deltas.

**Patentansprüche**

1. Verfahren zum automatischen Bestimmen von Ursache-Wirkungs-Ketten in Computerprogrammen, insbesondere einer automatisch gesteuerten Anlage, **dadurch gekennzeichnet, dass** an ausgewählten Stellen ein fehlerhafter und ein fehlerfreier Programmablauf verglichen und minimale fehlerverursachende Unterschiede bestimmt werden, wobei die bestimmten minimalen fehlerverursachenden Unterschiede die Ursache-Wirkungs-Kette repräsentieren.

2. Verfahren nach Anspruch 1, mit den Schritten:

   a) Bestimmen von mindestens einem Synchronisationspunkt in einem Programmablauf;

   b) Vergleichen der Programmzustände $z_1$, $z_2$ für einen fehlerfreien (A) und einen fehlerhaften (B) Programmlauf an dem mindestens einen bestimmten Synchronisationspunkt;

   c) Bestimmen an jedem Synchronisationspunkt, welche minimalen Unterschiede $\Delta(z_1, z_2)$ in den Abläufen relevant sind; und

   d) Ausgeben der die Ursache-Wirkungs-Kette repräsentierenden Zustandsunterschiede.

3. Verfahren nach Anspruch 2, wobei Synchronisationspunkte Punkte im Programm sind, an denen die Menge der zu untersuchenden Variablen identisch ist, oder durch Anlegen oder Löschen von Variablen identisch gemacht werden kann.

4. Verfahren nach Anspruch 2 oder 3, wobei jeder Unterschied relevant ist für das Auftreten eines Programmfehlers.

5. Verfahren nach einem der Ansprüche 2 bis 4, wobei Schritt c) die Schritte aufweist:

   c1) Ablaufenlassen des fehlerfreien Laufes (A) des Programmes, bis der Zustand $z_1$ erreicht ist;

c2) Anlegen oder Löschen von Variablen, so dass die Menge der zu untersuchenden Variablen identisch ist;

c3) Übertragen der Werte von $z_2$ oder einer Untermenge der Werte von $z_2$ des fehlerhaften Laufes (B) nach $z_1$; und

c4) Überprüfen, ob der Fehler noch auftritt oder nicht.

6. Verfahren nach einem der Ansprüche 2 bis 5, wobei ein Zustand $z_i$ ein Variable-Wert-Paar darstellt.

7. Verfahren nach Anspruch 5 oder 6, wobei die Werte $z_2$ aus einem anderen Lauf (B) des Programms nicht direkt übernommen, sondern mittels einer Rechenvorschrift erzeugt werden, in die Programmzustände aus dem fehlerhaften Lauf (B) eingehen.

8. Verfahren nach Anspruch 5, 6 oder 7, wobei die Werte $z_2$ aus mehreren anderen Läufen (B, C, D, ...) des Programms stammen.

9. Verfahren nach einem der Ansprüche 5 bis 8, wobei die Werte $z_2$ aus einer Rechenvorschrift erzeugt werden, in die Programmzustände aus dem fehlerfreien Lauf (A) eingehen.

10. Verfahren nach einem der Ansprüche 5 bis 9, wobei die Werte $z_1$ aus einem fehlerfreien Lauf (A) des Programms nicht direkt übernommen, sondern mittels einer Rechenvorschrift erzeugt werden, in die Programmzustände aus dem fehlerfreien Lauf (A) eingehen.

11. Verfahren nach einem der Ansprüche 5 bis 10, wobei die Werte $z_1$ aus mehreren anderen fehlerfreien Läufen des Programms stammen.

12. Verfahren nach einem der Ansprüche 5 bis 11, wobei die Werte $z_1$ aus einer Rechenvorschrift erzeugt werden, in die Programmzustände aus dem fehlerhaften Lauf (B) eingehen.

13. Verfahren nach einem der Ansprüche 2 bis 12, wobei jeder minimierte Unterschied an einem Synchronisationspunkt Teil der Ursache-Wirkungs-Kette ist.

14. Verfahren nach einem der Ansprüche 2 bis 13, wobei aus der Menge der Unterschiede mit Program Slicing irrelevante entfernt werden.

15. Verfahren nach einem der Ansprüche 1 bis 14, wobei die minimalen fehlerverursachenden Unterschiede mittels folgendem Algorithmus bestimmt werden:

$$dd_2(c_\checkmark, c_x, n) = \begin{cases} dd'_2(c_\checkmark, c_\checkmark \cup c_l, 2) & \text{wenn } \exists c_i \cdot test(c_\checkmark \cup c_i) = \mathbf{x} \\ dd'_2(c_x - c_i, c_x, 2) & \text{wenn } \exists c_i \cdot test(c_x - c_i) = \checkmark \\ dd'_2(c_\checkmark \cup c_i, c_x, \max(n-1,2)) & \text{wenn } \exists c_i \cdot test(c_\checkmark \cup c_i) = \checkmark \\ dd'_2(c_\checkmark, c_x - c_i, \max(n-1,2)) & \text{wenn } \exists c_i \cdot test(c_x - c_i) = \mathbf{x} \\ dd'_2(c_\checkmark, c_x, \min(2n, |c_x| - |c_\checkmark|)) & \text{wenn } n < (|c_x| - |c_\checkmark|) \\ (c_\checkmark, c_x) & \text{sonst} \end{cases}$$

Lauf A

Lauf B

Lauf A

Lauf B

Fig. 1

Fig. 2

EP 1 291 775 A1

**Europäisches Patentamt**

**EUROPÄISCHER RECHERCHENBERICHT**

Nummer der Anmeldung

EP 01 12 0775

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | H. CLEVE AND A. ZELLER: "Finding Failure Causes through Automated Testing" PROC. OF THE FOURTH INT. WORKSHOP ON AUTOMATED DEBUGGING (AADEBUG), August 2000 (2000-08), XP002189289 | 1,15 | G06F11/36 |
| A | * Zusammenfassung * * Absatz '0006! * | 2-14 | |
| A | AMMARI H: "Towards program debugging and dynamic reverse engineering using multi-procedure program dynamic decomposition" SYSTEM SCIENCES, 1997, PROCEEDINGS OF THE THIRTIETH HWAII INTERNATIONAL CONFERENCE ON WAILEA, HI, USA 7-10 JAN. 1997, LOS ALAMITOS, CA, USA,IEEE COMPUT. SOC, US, 7. Januar 1997 (1997-01-07), Seiten 71-80, XP010271823 ISBN: 0-8186-7743-0 * Zusammenfassung * * Absätze '0003!,'0004! * | 1-15 | |
| | | | RECHERCHIERTE SACHGEBIETE (Int.Cl.7) |
| A | US 6 212 653 B1 (PRUD HOMME FRANCOIS ET AL) 3. April 2001 (2001-04-03) * Zusammenfassung * | 1-15 | G06F |

Der vorliegende Recherchenbericht wurde für alle Patentansprüche erstellt

| Recherchenort | Abschlußdatum der Recherche | Prüfer |
|---|---|---|
| DEN HAAG | 6. Februar 2002 | Renault, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 12 0775

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-02-2002

| Im Recherchenbericht angeführtes Patentdokument | Datum der Veröffentlichung | Mitglied(er) der Patentfamilie | Datum der Veröffentlichung |
|---|---|---|---|
| US 6212653          B1 | 03-04-2001 | KEINE | |

EPO FORM P0461